Europäisches Patentamt

European Patent Office

Office européen des brevets

(19)

(11) Veröffentlichungsnummer: **0 059 463**
**B1**

(12) # EUROPÄISCHE PATENTSCHRIFT

(45) Veröffentlichungstag der Patentschrift:
13.11.85

(21) Anmeldenummer: **82101535.1**

(22) Anmeldetag: **27.02.82**

(51) Int. Cl.⁴: **F 16 B 7/04**

(54) Verbindungsvorrichtung.

(30) Priorität: **28.02.81 DE 3107661**

(43) Veröffentlichungstag der Anmeldung:
**08.09.82 Patentblatt 82/36**

(45) Bekanntmachung des Hinweises auf die Patenterteilung:
**13.11.85 Patentblatt 85/46**

(84) Benannte Vertragsstaaten:
**AT BE CH DE FR GB IT LI LU NL SE**

(56) Entgegenhaltungen:
**EP - A - 0 000 525**
**CH - A - 415 999**
**DE - A - 2 623 814**
**DE - B - 2 152 941**
**US - A - 3 574 367**

(73) Patentinhaber: **Martens, Karin, Holwelder Strasse 96-98, D-5000 Köln 80 (DE)**

(72) Erfinder: **Martens, Karin, Holwelder Strasse 96-98, D-5000 Köln 80 (DE)**

(74) Vertreter: **Freischem, Werner, Dipl.-Ing. et al, Patentanwälte Dipl.-Ing. W. Freischem Dipl.-Ing. I. Freischem An Gross St. Martin 2, D-5000 Köln 1 (DE)**

BUNDESDRUCKEREI BERLIN

## Beschreibung

Die Erfindung betrifft eine Verbindungsvorrichtung zum Verbinden eines in einer Seitenwand mit einem Loch versehenen Hohlprofils mit einem Stützteil, das eine der offenen Stirnseite des Hohlprofils zugewandte hinterschnittene Nut aufweist, mit einem in das Hohlprofil einschiebbaren Gehäuse, in dem ein Exzenter gelagert und befestigt ist, der einen durch das Loch des Hohlprofils hindurchragenden Drehkopf aufweist, und mit einem durch Drehen des Exzenters in dem Gehäuse bewegbaren, aus dem Gehäuse in Richtung auf das Stützteil herausragenden Schieber, dessen äußeres Ende hakenförmig ausgebildet ist und beim Ausfahren aus dem Gehäuse quer zur Gehäuselängsrichtung nach außen gedrückt wird.

Derartige Verbindungsvorrichtungen können beispielsweise dazu benutzt werden, hohl ausgebildete Wandelemente oder Träger mit einer vertikalen Stützsäule zu verbinden. Eine bekannte Verbindungsvorrichtung besteht aus einem schmalen Gehäuse, das in das Hohlprofil eingeschoben und durch eine quer durch das Hohlprofil und das darin befindliche Gehäuse eingesetzte Schraube relativ zu dem Hohlprofil festgehalten wird (DE-PS 17 75 802). Die Schraube geht ohne Gewindeeingriff in das Gehäuse der Verbindungsvorrichtung hinein und wird im Inneren des Gehäuses mit dem einen Ende eines Verriegelungselementes verschraubt, das als Rippe ausgebildet ist und dessen aus der Vorderseite des Gehäuses herausragendes freies Ende hakenförmig gestaltet ist. Beim Festziehen der Schraube wird das hakenförmige vordere Ende des Verriegelungselementes seitlich bewegt, so daß es in der hinterschnittenen Nut des Stützteiles einrastet. Beim Festziehen der Schraube wird also zweierlei erreicht: Einmal wird das Verriegelungselement zusammen mit dem Gehäuse an dem Hohlprofil festgespannt und zum anderen wird das Verriegelungselement auch in bezug auf das Stützteil arretiert. Auf diese Weise werden Hohlprofil und Stützteil fest miteinander verbunden. Bei einer derartigen Verbindungsvorrichtung erfordert die Montage eine gewisse Geschicklichkeit und außerdem einen erheblichen Zeitaufwand. Dies liegt daran, daß die Schraube von außen durch das Loch in der Seitenwand des Hohlprofils und außerdem durch ein Loch im Gehäuse hindurch in eine Gewindebohrung des Verriegelungsteiles eingeschraubt werden muß. Dies funktioniert nur, wenn die betreffenden Teile exakt zueinander ausgerichtet sind. Außerdem müssen zum Spannen der Schraube mehrere Umdrehungen durchgeführt werden.

Bekannt ist ferner eine Verbindungsvorrichtung, bei der die Verstellung des Schiebers über einen Exzenter erfolgt, der mit einem Drehkopf aus dem Gehäuse heraus vorsteht und in das Loch des Hohlprofils hineinragt. Hierbei genügt zum Spannen eine Drehung des Drehkopfes von maximal 180°.

Der Exzenter ist allerdings an dem Gehäuse verschraubt und er kann erst in das Gehäuse eingesetzt und an diesem befestigt werden, nachdem das Gehäuse zuvor in das Hohlprofil eingeschoben wurde. Nach dem Einsetzen des Exzenters muß dieser also zunächst mehrmals gedreht werden, damit er an dem Gehäuse festhält. Hierdurch geht der durch den Exzenter bewirkte Schnellspanneffekt teilweise verloren, weil die Befestigung des Exzenters mehrere Drehungen erfordert (EP-A-525).

Bekannt ist ferner eine Verbindungsvorrichtung, bei der der Exzenter bleibend in dem Gehäuse gelagert ist. Der Exzenter weist eine Vierkantöffnung auf, in die ein entsprechender Vierkantbolzen, der am Drehkopf befestigt ist, eingesetzt werden kann. Hierbei wird nur der Drehkopf mit dem Vierkantbolzen von außen durch das Loch des Hohlprofiles hindurch in die Vierkantöffnung des Exzenters eingesteckt. Das Spannen der Verbindungsvorrichtung erfolgt dann unter Ausnutzung des Schnellspanneffektes des Exzenters durch Drehen des Drehkopfes. Diese Verbindungsvorrichtung hat allerdings den Nachteil, daß der Drehkopf mit dem Vierkant ein separates Teil darstellt, das bei der Montage der Verbindungsvorrichtung von außen in das Hohlprofil eingesteckt werden muß. Derartige separate Teile gehen leicht verloren oder sind eventuell am Montageort nicht in genügender Anzahl vorhanden. Außerdem besteht die Gefahr des nachträglichen Herausfallens des Drehkopfes.

Der Erfindung liegt die Aufgabe zugrunde, eine Verbindungsvorrichtung der eingangs genannten Art zu schaffen, die keine separat zu montierenden Teile aufweist, sondern lediglich in das Hohlprofil eingesteckt und festgespannt werden muß. Dadurch soll einerseits der für die Montage erforderliche Zeitaufwand herabgesetzt werden und andererseits soll die Verwendung verlierbarer Einzelteile vermieden werden.

Zur Lösung dieser Aufgabe ist erfindungsgemäß vorgesehen, daß der Exzenter axial verschiebbar an dem Gehäuse verankert und durch eine Feder abgestützt ist und gegen die Wirkung der Feder mindestens bündig mit der Außenkontur des Gehäuses in das Gehäuse eindrückbar ist.

Der Exzenter ist hierbei so mit dem Gehäuse verbunden, daß er von diesem normalerweise nicht demontiert werden muß. Zum Einschieben der Verbindungsvorrichtung in das Hohlprofil wird der Exzenter gegen die Wirkung der Feder eingedrückt, so daß er etwa bündig mit der Außenkontur des Gehäuses abschließt und nicht über das Innenmaß des Hohlprofiles vorsteht. Wenn der Drehkopf des Exzenters in den Bereich des Loches gelangt, springt er selbsttätig in das Loch hinein vor, wodurch die Verbindungsvorrichtung an dem Hohlprofil verriegelt wird. Der Drehkopf des Exzenters bildet also gleichzeitig das Verriegelungselement, mit dem die Verbindungsvorrichtung an dem Loch des Hohlprofiles verankert wird. Anschließend kann der Exzenter durch Angriff eines Werkzeugs an dem Drehkopf verstellt werden, so daß der Schieber eingezogen oder ausgefahren wird.

Beim Angreifen eines Drehwerkzeugs an dem Drehkopf besteht die Möglichkeit, daß der Drehkopf ungewollt gegen die Wirkung der Feder zurückgedrückt wird. Beim Spannen des Exzenters kann es also passieren, daß der Drehkopf eingedrückt wird und seinen Halt an der Wand des Lochs des Hohlprofiles verliert. Um dies zu vermeiden, ist gemäß einer vorteilhaften Weiterbildung der Erfindung mit dem Schieber eine relativ zu dem Gehäuse verschiebbare Druckplatte gekoppelt, deren Ende sich in der Rückzugsstellung des Schiebers unter das innere Ende des Exzenters legt und den Drehkopf des Exzenters im herausgedrückten Zustand arretiert.

Hierbei gibt die Druckplatte den Exzenter frei, wenn der Schieber sich in der Vorschubstellung befindet, die Verbindungsvorrichtung insgesamt also entspannt ist. Während des Spannens schiebt sich die Druckplatte unter den Schaft des Exzenters, so daß der Exzenter nun keine Axialbewegung mehr ausführen kann. Damit ist sichergestellt, daß auch bei einem axialen Druck auf den Drehkopf, der Drehkopf während des Spannens nicht in das Gehäuse eingedrückt werden kann.

Vorzugsweise weist das vordere Ende der Druckplatte eine dem Exzenter zugewandte Abschrägung auf. Hierdurch wird erreicht, daß die Druckplatte sich beim Spannen der Verbindungsvorrichtung unter das untere Ende des Exzenters schiebt und zwar auch dann, wenn der Drehkopf des Exzenters bereits teilweise eingedrückt ist. Durch die Abschrägung werden auch Verhakungen oder Verkantungen vermieden.

Gemäß einer bevorzugten Ausführungsform der Erfindung weist das Gehäuse zwei über eine Bodenwand überstehende Seitenwände auf, zwischen denen die Druckplatte angeordnet ist, und die Kanten der Seitenwände liegen wenigstens annähernd mit der Außenseite der Druckplatte in einer gemeinsamen Ebene. Das Gehäuse bildet somit einen Kanal, in dem die Druckplatte verschiebbar ist. Die Druckplatte stützt sich direkt an der Wand des Hohlprofiles ab, so daß sie keine gesonderte Abstützung an dem Gehäuse benötigt.

In vorteilhafter Weiterbildung der Erfindung weist die Druckplatte Führungselemente auf, die in Längsschlitze der Bodenplatte des Gehäuses eingreifen. Die Druckplatte kann mit einem Schaft in eine Gewindebohrung des Schiebers hineinragen.

Die Druckplatte braucht keine starre Führung. Sie kann aus einem relativ einfach und billig herzustellenden Kunststoffteil bestehen, das lediglich an der Bodenplatte des Gehäuses geführt werden muß, wobei die Bewegung des Schiebers über den Schaft auf die Druckplatte übertragen wird. Wichtig ist nur, daß die Druckplatte sich während des Spannens des Exzenters unter das Ende des Exzenterschaftes schiebt und zwischen dem Exzenterschaft und der Wand des Hohlprofiles eingeklemmt wird, so daß der Schaft in axialer Richtung durch die Druckplatte arretiert wird.

Gemäß einer vorteilhaften Weiterbildung der Erfindung nimmt die Höhe der Seitenwände jeweils von den Enden des Gehäuses zur Gehäusemitte hin leicht zu. Hierdurch wird das Einschieben der Verbindungsvorrichtung in das Hohlprofil erleichtert.

Im folgenden wird unter Bezugnahme auf die Zeichnungen ein bevorzugtes Ausführungsbeispiel der Erfindung näher erläutert.

Es zeigt

Fig. 1 einen Längsschnitt durch die Verbindungsvorrichtung vor dem Einsetzen in das Hohlprofil und vor der Anbringung an dem Stützteil,

Fig. 2 einen Querschnitt entlang der Linie II-II von Fig. 1,

Fig. 3 eine Ansicht des Gehäuses von unten und

Fig. 4 einen Längsschnitt durch die Verbindungsvorrichtung im montierten Zustand.

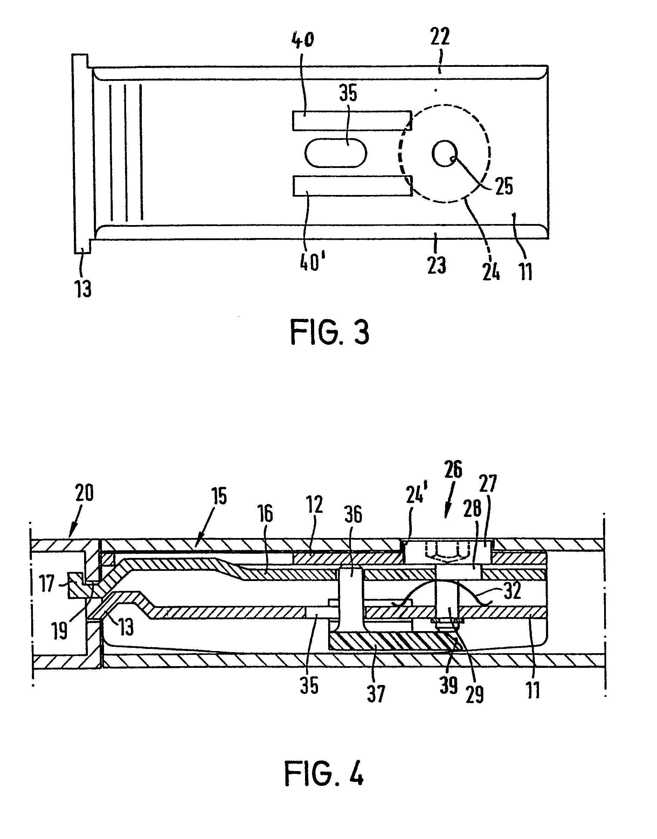

Die dargestellte Verbindungsvorrichtung weist ein langgestrecktes Gehäuse 10 mit einer Bodenwand 11 und einer dazu parallelen Oberwand 12 auf. Das vordere Ende der Bodenwand 11 ist mit einer Abschrägung 13 versehen, die seitlich über die Gehäusekontur übersteht (Fig. 3), um zu verhindern, daß das Gehäuse 10 zu weit in das Hohlprofil 15 eingesteckt wird.

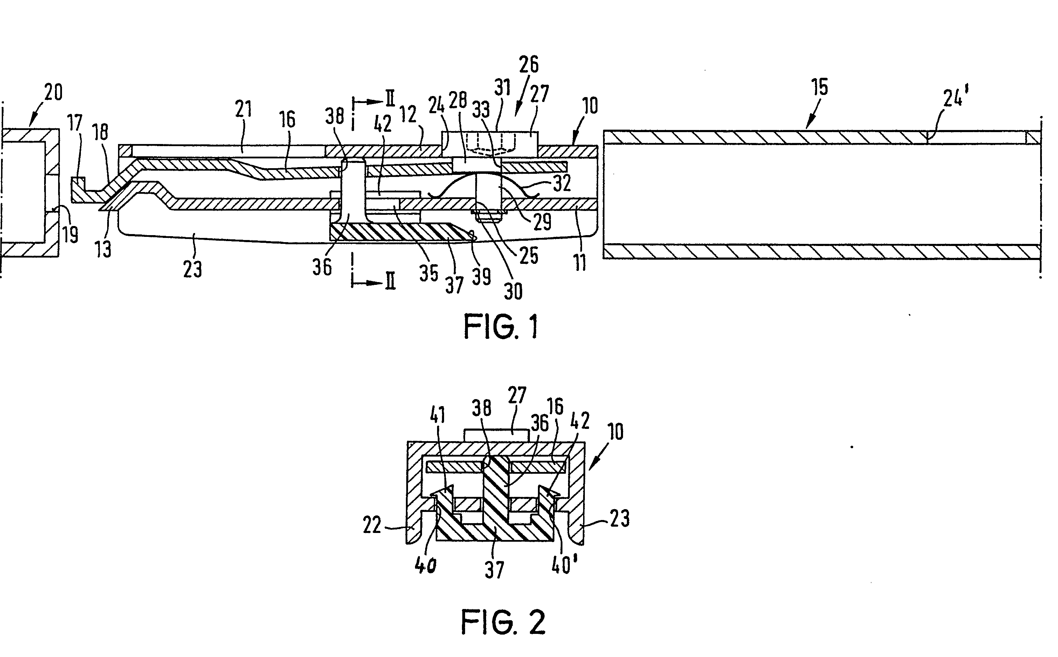

Im Inneren des Gehäuses 10 befindet sich der Schieber 16, der aus einem im wesentlichen plattenförmigen Element besteht, das sich in Längsrichtung des Gehäuses erstreckt und das an seinem vorderen Ende einen nach außen abgebogenen Haken 17 und dahinter eine Schrägschulter 18 aufweist. Die Schrägschulter 18 wirkt mit der Schrägfläche 13 der Bodenwand 11 in der Weise zusammen, daß das vordere Ende des Schiebers 16 nach außen gedrückt wird, wenn der Schieber 16 in dem Gehäuse 10 (gemäß Fig. 1 nach rechts) zurückgezogen wird. In der in Fig. 1 dargestellten Position, in der sich der Schieber 16 in der vorderen Endlage befindet, steht der Haken 17 vor der Schrägfläche 13, so daß der Haken 17 und das vordere Ende der Schrägfläche 13 in die hinterschnittene Nut 19 eines Stützteiles 20 eingeschoben werden können. Wird anschließend der Schieber 16 zurückgezogen, dann drückt das überstehende vordere Ende der Bodenplatte 11 gegen die Seitenfläche der Nut 19, während der noch weiter vorstehende Haken 17 die gegenüberliegende Seitenfläche der Nut 19 hintergreift.

Die Oberwand 12 des Gehäuses 10 weist im vorderen Bereich einen Ausschnitt 21 auf, durch den eine ungehinderte Bewegung des Schiebers 16 ermöglicht wird.

Die Seitenwände 22, 23 des Gehäuses 10 überragen die Bodenwand 11 nach unten hin (Fig. 2). Ihre Außenkanten laufen nicht genau parallel zur Oberwand 12, sondern unter einem kleinen Winkel hierzu, so daß die Höhe der Seitenwände 22, 23 von dem vorderen und dem hinteren Ende des Gehäuses 10 aus bis zur Gehäusemitte leicht zunimmt (Fig. 1 und 4). Hierdurch wird das Einschieben des Gehäuses 10 in das Hohlprofil 15, dessen lichte Weite der größten Höhe der Seitenwände 22, 23 entspricht, erleichtert.

In einer Öffnung 24 der Oberwand 12 und einer Öffnung 25 der Bodenwand 11 des Gehäuses ist der Exzenter 26 gelagert. Der Exzenter 26 besteht aus dem Drehkopf 27, der darunter angeordneten Exzenterscheibe 28 und dem durch die Öffnung 25 hindurchragenden Schaft 29. Der Schaft 29 weist an seinem Ende eine Ringnut auf, in der ein Sprengring 30 befestigt ist, der sich von unten gegen die Bodenwand 11 legt und das Herausziehen des Schaftes 29 aus der Öffnung 25 verhindert. Der Drehkopf 27 und der Schaft 29 verlaufen koaxial zueinander, während die Achse der Exzenterscheibe 28 gegenüber der gemeinsamen Achse des Drehkopfes 27 und des Schaftes 29 versetzt ist. Der Drehkopf 27 weist einen Innensechskant 31 auf, in den ein Drehwerkzeug eingesetzt werden kann, um den Exzenter 26 zu drehen.

Der Exzenter 26 wird von einer Blattfeder 32, die auf der Bodenwand 11 abgestützt ist und von unten gegen die Exzenterscheibe 28 drückt, hochgedrückt bis der Sprengring 30 sich gegen die Unterseite der Bodenwand 11 legt. In dieser Stellung ragt der Drehkopf 27 über die Kontur der Oberwand 12 hinaus. Der Drehkopf 27 kann jedoch mit der Hand eingedrückt werden, so daß die Blattfeder 32 gespannt wird und der Sprengring 30 sich von der Bodenwand 11 entfernt.

Das rückwärtige Ende des Schiebers 16 weist ein Langloch 33 mit quergerichteter Längsachse auf, in das die runde Exzenterscheibe 28 hineinragt. Auf diese Weise kann durch Drehen des Drehkopfes 27 die Vorschubstellung des Schiebers 16 verändert werden. Die Blattfeder 32 greift auch unter den rückwärtigen Bereich des Schiebers 16, so daß das Ineinandergreifen von Langloch 33 und Exzenterscheibe 28 sichergestellt ist.

Durch ein Langloch 35, das in Längsrichtung durch die Bodenplatte 11 verläuft, ragt der von der Druckplatte 37 vertikal abstehende Zapfen 36 hindurch. Das obere Ende des Zapfens 36 greift in ein Loch 38 des Schiebers 16 ein, so daß die Druckplatte 37 die Längsbewegungen des Schiebers 16 mitmacht. Das rückwärtige Ende 39 der Druckplatte 37 ist abgeschrägt, so daß sich die Druckplatte 37 ohne die Gefahr des Verkantens leicht unter das freie Ende des Schaftes 29 schieben läßt. Wird der Exzenter 26 gedreht und dadurch der Schieber 16 zurückgezogen, dann nimmt die Druckplatte 37 an dieser Rückzugsbewegung teil, wodurch sich ihr rückwärtiges Ende unter das untere Ende des Schaftes 29 schiebt. Dadurch wird der Exzenter 26 in Längsrichtung arretiert, so daß er nicht eingedrückt werden kann. Dieser Zustand ist in Fig. 4 dargestellt.

Die Druckplatte 37 ist in zwei längslaufenden Schlitzen 40, 40', die sich zu beiden Seiten des Langlochs 35 erstrecken und parallel zu diesem verlaufen, verschiebbar. In die Schlitze 40 und 40' greifen Stege 41, 42 ein, die von der Oberseite der Druckplatte 37 abstehen und mit Rastnasen über die Schlitzränder übergreifen. Da die Länge der Stege 41, 42 wesentlich kleiner ist als die Länge der Schlitze 40 und 40', kann die Druckplatte 37 in der Schlitzführung in Längsrichtung verschoben werden. Zwischen den seitlichen Stegen 41, 42 ragt der Schaft 36 auf.

Bei der Montage wird das Gehäuse 10 mit eingedrücktem Drehkopf 27 gemäß Fig. 1 in das Innere des Hohlprofiles 15 eingeschoben, wobei der Drehkopf 27 von der oberen Wand des Hohlprofils 15 niedergedrückt gehalten wird. In dem Loch 24' schnappt der Drehkopf 27 hoch, wodurch die Verbindungsvorrichtung im Inneren des Hohlprofiles 15 verriegelt wird. Danach wird das vordere Ende der Verbindungsvorrichtung in die hinterschnittene Nut 19 des Stützteiles 20 eingesetzt und der Drehkopf 27 mit einem (nicht dargestellten) Drehwerkzeug, das in den Innensechskant 31 eingesetzt wird, um etwa 180° gedreht. Bei dieser Drehung bewegt die Exzenterscheibe 28 den Schieber 16 nach hinten. Dabei wird der Haken 17 entlang der Schrägfläche 13 nach außen gedrückt und verriegelt sich fest hinter der Nut 19 (Fig. 4). Beim Zurückziehen des Schiebers 16 schiebt sich die Druckplatte 27 zwischen die Unterseite des Hohlprofiles 15 und die freie Stirnwand des Schaftes 29, so daß bereits während des Spannens der Exzenter 26 nicht mehr gegen die Kraft der Blattfeder 32 niedergedrückt werden kann.

Zum Entriegeln wird der Drehkopf 27 wieder um etwa 180° gedreht. Während dieses Vorgangs gibt die Druckplatte 37 den Schaft 29 wieder frei und der Schieber 16 wird vorgeschoben. Danach kann das Stützteil 20 entfernt werden. Die Verbindungsvorrichtung kann nun wieder aus dem Hohlprofil 15 herausgezogen werden, indem der Exzenter 26 gegen die Kraft der Blattfeder 32 niedergedrückt und das Gehäuse aus dem Hohlprofil 15 herausgezogen wird.

## Patentansprüche

1. Verbindungsvorrichtung zum Verbinden eines in einer Seitenwand mit einem Loch (24') versehenen Hohlprofiles (15) mit einem Stützteil (20), das eine der offenen Stirnseite des Hohlprofils zugewandte hinterschnittene Nut (19) aufweist, mit einem in das Hohlprofil einschiebbaren Gehäuse (10), in dem ein Exzenter (26) gelagert und befestigt ist, der einen durch das Loch des Hohlprofiles hindurchragenden Drehkopf (27) aufweist, und mit einem durch Drehen des Exzenters in dem Gehäuse bewegbaren, aus dem Gehäuse in Richtung auf das Stützteil herausragenden Schieber (16), dessen äußeres Ende als Haken (17) ausgebildet ist und beim Ausfahren aus dem Gehäuse quer zur Gehäuselängsrichtung nach außen gedrückt wird, dadurch gekennzeichnet, daß der Exzenter (26) axial verschiebbar an dem Gehäuse (10) verankert und durch eine Feder (32) abgestützt ist und gegen die Wirkung der Feder (32) mindestens bündig mit der Außenkontur des Gehäuses (10) in das Gehäuse (10) eindrückbar ist.

2. Verbindungsvorrichtung nach Anspruch 1, dadurch gekennzeichnet, daß mit dem Schieber (16) eine relativ zu dem Gehäuse (10) verschiebbare Druckplatte (37) gekoppelt ist, deren Ende (39) sich in der Rückzugsstellung des Schiebers (16) unter den Exzenter (26) legt und den Drehkopf (27) des Exzenters (26) im herausgedrückten Zustand arretiert.

3. Verbindungsvorrichtung nach Anspruch 2, dadurch gekennzeichnet, daß das Ende (39) der Druckplatte (37) eine dem Exzenter (26) zugewandte Abschrägung aufweist.

4. Verbindungsvorrichtung nach Anspruch 2 oder 3, dadurch gekennzeichnet, daß das Gehäuse (10) über eine Bodenwand (11) überstehende Seitenwände (22, 23) aufweist, zwischen denen die Druckplatte (37) angeordnet ist, und daß die Kanten der Seitenwände (22, 23) wenigstens annähernd mit der Außenseite der Druckplatte (37) in einer gemeinsamen Ebene liegen.

5. Verbindungsvorrichtung nach einem der Ansprüche 1 bis 4, dadurch gekennzeichnet, daß die Druckplatte (37) Stege (41, 42) aufweist, die in Längsschlitze (40, 40') der Bodenwand (11) des Gehäuses (10) eingreifen.

6. Verbindungsvorrichtung nach einem der Ansprüche 1 bis 5, dadurch gekennzeichnet, daß die Druckplatte (37) mit einem Schaft (36) in ein Loch (38) des Schiebers (16) hineinragt.

7. Verbindungsvorrichtung nach Anspruch 4, dadurch gekennzeichnet, daß die Höhe der Seitenwände (22, 23) jeweils von den Enden des Gehäuses (10) zur Gehäusemitte hin leicht zunimmt.

## Claims

1. Joining device for connecting a hollow section (15) provided with a hole (24') in a side wall with a support (20) having an undercut groove facing the open front of the hollow section, the device incorporating a shell (10) that can be inserted into the hollow section, whereby a cam (26) having a rotating heas (27) that can be projected through the hole in the hollow section is held and secured in the shell, and also incorporating a slider (16) that can be moved in the shell by turning the cam, and which projects from the shell in the direction of the support, whereby the outermost part of the slider is shaped like a hook (17) which is pushed outward transversely to the longitudinal direction of the shell when it is protruded therefrom, characterized in that the axially slidable cam (26) is anchered to the shell (10) and supported by a spring (32), and can be pushed into the shell (10) against the action of the spring (32) at least flush with the outer outline of the shell (10).

2. Joining device according to claim 1, characterized in that a pressure plate (3) which is relatively slidable with respect to the shell (10) is coupled with the slider (16), whereby the end (39) if the plate is moved beneath the cam (26) in the retracted position of the slider (16) and the rotating head (27) of the cam (26) is arrested in the protracted position.

3. Joining device according to claim 2, characterized in that the end (39) of the pressure plate (37) has a bevel edge facing the cam (26).

4. Joining device according to claim 2 or 3, characterized in that the shell (10) includes side walls (22, 23) overlapping a bottom part (11), and between which is arranged the pressure plate (37), whereby the edges of the side walls (22, 23) lie in at least approximative commun plane with the exterior side of the pressure plate (37).

5. Joining device according to one of the claims 1 to 4, characterized in that the pressure plate (37) presents flanges (41, 42) that engage with longitudinal slots (40, 40') in the bottom part (11) of the shell (10).

6. Joining device according to one of the claims 1 to 5, characterized in that the pressure plate (37) with shaft (36) protrude into a hole (38) in the slider (16).

7. Joining device according to claim 4, characterized in that in any event the height of the side walls (22, 23) slightly increases from the end of the shell (10) towards the middle of the shell.

## Revendications

1. Dispositif pour fixer un profil creux (15), pourvu d'une ouverture (24') dans une face latérale, a un support (20) qui présente une ouverture (19) pratiquée dans sa section frontale, tournée vers l'ouverture du profil creux, au moyen d'un boutier qu'on peut glisser dans ledit prifil creux, boutier dans lequel un excentique (26) est disposé et fixé, qui présente une tete (27) qui ressort par l'ouverture du profil creux, et au moyen d'un conlisseau (16) mobile dans le boutier par rotation de la tete et pourant sortir du boutier en direction de la piece de support, conlisseau dont l'extrémité sortante a la forme d'un crochet (17) et qui lorsqu'elle sort du boutier, est poussée vers l'extérieur transversalement par rapport a l'axe long du boutier, caractérisé on ce que l'excentique (26), déplaceable arialment, est fixé au boutier (10) et supporté par un ressort (32) et peut etre enfoncé contre l'action dudit ressort dans le boutier (10) jusqu'a etre au moins aligné avec la surface extérieure de ce meme boutier (10).

2. Dispositif de fixation selon la revendication 1, caractérisé en ce qu'une plaque de support (37), déplacable relativement par rapport au boutier (10) est accouplée au conlisseau (16) l'extrémité (39) de cette plaque venant se situer sans l'excentrique (26) lorsque le conlisseau (16) est en position reculée et y blaquant la tete (27) de l'excentrique (26) en position haute.

3. Dispositif de fixation selon la revendication 2, caractérisé en ce que l'extrémité (39) de la plaque de support (37) présente une surface oblique orientée vers l'excentrique (26).

4. Dispositif de fixation selon les revendications 2 ou 3, caractérisé en ce que le boutier (10) présente s'élevant de part et d'autre au-dessus d'une base (11) des parois latérales (22, 23) entre lesquelles la plaque de support (37) vient se setuer, et en ce que les extrémités des parois latérales (22, 23) sont au minimum setuées dans un plan commun avec la face extérieure de la plaque de support (37).

5. Dispositif de fixation selon l'une des revendications 1 a 4, caractérisé en ce que la plaque de support (37) présente des pattes de guidage (41, 42) qui s'encliquent dans des fentes longitudinales (40, 40') de la plaque de fond (11) du boutier (10).

6. Dispositif de fixation selon l'une des revendications 1 a 5, caractérisé en ce que la plaque de support (37) comprend un axe (36) qui pointe par une ouverture (38) du conlisseau (16).

7. Dispositif de fixation selon la revendication 4, caractérisé en ce que la fauteur des parois latérales (22, 23) va en augmentant légerement depuis les extrémités du boutier (10) jusqu'a sa section médiane.

FIG. 1

FIG. 2

0 059 463

FIG. 3

FIG. 4